# EUROPÄISCHE PATENTSCHRIFT

(11) **EP 1 812 147 B1**
(45) Veröffentlichungstag und Bekanntmachung des Hinweises auf die Patenterteilung: **29.09.2010**
(21) Anmeldenummer: 05797298.6
(22) Anmeldetag: 13.10.2005
(51) Int. Cl.: B01D 63/08, B01D 65/00

(54) **VORRICHTUNG ZUM FILTERN VON STOFFEN AUS FLÜSSIGKEITEN**
DEVICE FOR FILTERING SOLIDS FROM LIQUIDS
DISPOSITIF POUR ELIMINER PAR FILTRAGE DES SUBSTANCES CONTENUES DANS DES LIQUIDES

(30) Priorität: 22.10.2004 DE 102004051671
(43) Veröffentlichungstag der Anmeldung: 01.08.2007
(73) Patentinhaber: Microdyn-Nadir GmbH, 65203 Wiesbaden (DE)
(72) Erfinder: VOIGT, Reinhard, 99867 Gotha (DE); MEYER-BLUMENROTH, Ulrich, 65510 Idstein-Wörsdorf (DE); LIPNIZKI, Jens, 65189 Wiesbaden (DE)
(74) Vertreter: Schweitzer, Klaus
(86) Internationale Anmeldenummer: PCT/EP2005/010999
(87) Internationale Veröffentlichungsnummer: WO 2006/045440

(56) Entgegenhaltungen:
- EP-A- 0 129 663
- EP-A- 1 147 803
- WO-A-03/037489
- WO-A-03/059494
- WO-A-03/074160
- DE-A1- 10 126 311
- US-A- 5 626 752
- PATENT ABSTRACTS OF JAPAN Bd. 1998, Nr. 12, 31. Oktober 1998 (1998-10-31) -& JP 10 180051 A (INAX CORP), 7. Juli 1998 (1998-07-07) -& DATABASE WPI Section Ch, Week 199837 Derwent Publications Ltd., London, GB; Class D15, AN 1998-431715 XP002366990 & JP 10 180051 A (INAX KK) 7. Juli 1998 (1998-07-07)
- PATENT ABSTRACTS OF JAPAN Bd. 1997, Nr. 07, 31. Juli 1997 (1997-07-31) -& JP 09 075965 A (INAX CORP), 25. März 1997 (1997-03-25) -& DATABASE WPI Section Ch, Week 199722 Derwent Publications Ltd., London, GB; Class D15, AN 1997-240082 XP002366991 & JP 09 075965 A (INAX KK) 25. März 1997 (1997-03-25)
- PATENT ABSTRACTS OF JAPAN Bd. 011, Nr. 353 (C-457), 18. November 1987 (1987-11-18) -& JP 62 125823 A (MATSUSHITA ELECTRIC IND CO LTD), 8. Juni 1987 (1987-06-08) -& DATABASE WPI Section Ch, Week 198728 Derwent Publications Ltd., London, GB; Class E36, AN 1987-195907 XP002366992 & JP 62 125823 A (MATSUSHITA ELEC IND CO LTD) 8. Juni 1987 (1987-06-08)

## Beschreibung

Die Erfindung betrifft eine Vorrichtung zum Filtern von Stoffen aus Flüssigkeiten durch Mikro-, Ultra- und Nanofiltration mit einer Anzahl von Filtermodulen aus Filterelementen, die als flache Membrantaschen ausgebildet und von einer zu filternden Flüssigkeit umgeben sind, wobei die Filterelemente parallel und voneinander beabstandet angeordnet und durch Abflussbohrungen und Verbindungselemente miteinander verbunden sind, einem Permeatablauf je Filtermodul und einem Permeatsammler, an den die Permeatabläufe der Filtermodule angeschlossen sind.

Herkömmliche Filtersysteme zur Abwasserreinigung bestehen aus einer Filtrationseinheit mit einem oben und unten offenen rohr- oder kastenförmigen Gehäuse, in dem mehrere flache Filterelemente vertikal und parallel zueinander beabstandet angeordnet sind. Die Zwischenräume zwischen den einzelnen Filterelementen bilden Durchgänge, die durchströmbar sind. Die einzelnen Filterelemente sind als Kissen oder Kassetten ausgestaltet, bei denen eine flexible Drainageschicht bzw- starre Filterplatte beidseitig von Filtrationsmembranen umgeben ist.

EP 0 707 884 A1 offenbart eine Vorrichtung zum Filtern und Trennen von insbesondere biologisch organischen Strömungsmedien durch Umkehrosmose sowie Mikro-, Ultra- und Nanofiltration mit einem druckdichten Gehäuse, mit einem Einlass für das Strömungsmedium und Auslässen für das Retentat sowie das Permeat und einer Mehrzahl im Gehäuse aufgenommener, voneinander beabstandeter Filterelemente, die nach Art eines Membrankissens ausgebildet sind und die vom Strömungsmedium umflossen werden, wobei im Gehäuse eine Mehrzahl von gesonderten Stapeln von Membrankissen hinter- oder nebeneinander angeordnet ist und wobei die Stapel hintereinander oder nebeneinander vom Strömungsmedium umflossen werden.

EP 0 129 663 A1 lehrt ein Membrankissen für Wasserentsalzung durch Umkehrosmose, Ultrafiltration, Hyperfiltration, Gaspermeation und dgl., bei dem eine Drainageschicht zwischen zwei äußeren Membranen angeordnet und die Drainageschicht mit den Membranen in einer Randzone durchgehend und druckdicht verschweißt ist.

WO 03/037489 A1 beschreibt ein Filtrationsmodul zur Reinigung von Abwasser mit mehreren, mindestens eine Öffnung zur Entwässerung ihres Innenraums aufweisenden Filtermembrantaschen, die vertikal, parallel und vorzugsweise in gleichem Abstand zueinander in einem starren Halter so ange ordnet sind, dass die zwischen benachbarten Filtermembrantaschen liegenden Zwischenräume intensiv von einer Flüssigkeit durchströmbar sind.

WO03/059494 beschreibt eine Filtrationsvorrichtung bei der mehrere Membranelemente aneinander gereiht sind, wobei die einzelnen Membranelemente Membrankissen sind die eine Abflussbohrung für Filtrat aufweisen. Die Abflussbohrung befinden sich nicht mittig an einem Ende der Membrankissen.

Die bekannten Filtersysteme beinhalten entweder starre Gehäuse und/oder starre Membrankassetten, deren Herstellung und Montage aufwendig und kostenintensiv ist, die den Raumbedarf des Filtermoduls vergrößern, die Strömung der zu filternden Flüssigkeit behindern und an denen sich bevorzugt gröbere Verunreinigungen wie z. B. Haare und Fasern anlagern und Verstopfungen verursachen.

Im laufenden Betrieb eines Filtersystems werden Partikel, deren Durchmesser zu groß ist, um die Membranporen zu passieren, auf der Membranoberfläche zurückgehalten und bleiben teilweise haften. Durch Akkumulation solcher Partikel über längere Zeiträume baut sich Filterkuchen auf, der die Membranoberflächen zunehmend verstopft und die Filterleistung des Systems reduziert. Im Rahmen der Anlagenwartung werden die Membranoberflächen regelmäßig mechanisch gereinigt und von Filterkuchen befreit, z. B. mittels Bürsten und Wasserstrahl. Durch das Gehäuse der bekannten Filtersysteme wird der Zugang zu den Membranoberflächen erheblich eingeschränkt und damit die Reinigung erschwert.

Neben der mechanischen Reinigung besteht die Möglichkeit die Membranporen durch Rückspülung, d. h. Druckumkehr, freizuspülen. Bei den bekannten flächenhaften Filtersystemen wird die Rückspülung in der Regel nicht eingesetzt, da sie zum einen die Gefahr birgt, das Filterelement zu überdehnen und Risse in der zugempfindlichen Membran zu verursachen, und zum anderen die Membranen benachbarter Filterelemente gegeneinander gepresst werden und dabei den Rückfluss und die Ablösung des Filterkuchens blockieren.

Einige der bekannten Filtersysteme haben zusätzlich den Nachteil, dass Filterkuchen aufgrund räumlich ungleichmäßiger Verteilung des transmembranen Differentialdruckes lokal beschleunigt wachsen. Die Wachstumsrate des Filterkuchens ist direkt proportional zum transmembranen Volumenstrom und dam it zum transmembranen Differentialdruck. Hinsichtlich des Flüssigkeitsdruckes weisen die bekannten Filtersysteme drei Bereiche auf, die mit Filtervorlauf, Filterelement-Innenraum und Permeatablauf bezeichnet sind. Im Betrieb wird zwischen Filtervorlauf (Pᵥ) und Permeatablauf (Pₐ) mittels ablaufseitiger Saug- oder vorlaufseitiger Druckpumpen eine geringe Druckdifferenz (Pᵥ - Pₐ > 0) angelegt, so dass ein Teil der zu filternden Flüssigkeit vom Filtervorlauf durch die Membran zum Permeatablauf strömt. Unter normalen Betriebsbedingungen sind Strömungsgeschwindigkeit und Druckabfall im Filtervorlauf und Permeatablauf gering, so dass im wesentlichen die konstanten Drücke Pᵥ und Pₐ auf die Filterelemente und die Abflussbohrungen wirken. Dies gilt nicht für den Filterelement-Innenraum (Pᵢ), in dem das Permeat schnell strömt und zudem die Strömungsgeschwindigkeit zu jeder Abflussbohrung hin zunimmt. Dementsprechend wirkt im Filterelement-Innenraum ein ortsabhängiger statischer Druck Pᵢ, wobei Pᵢ zwischen Pₐ und Pᵥ liegt (Pₐ ≤ Pᵢ ≤ Pᵥ) und zu jeder Abflussbohrung hin abfällt. Das durch die Membran pro Zeit- und Flächeneinheit strömende Flüssigkeitsvolumen ist proportional zum transmembranen Differentialdruck Pᵥ - Pᵢ. Daher baut sich Filterkuchen in Bereichen mit hohem transmembranem Differentialdruck d.h. nahe einer Abflussbohrung schneller auf als in abgelegenen Bereichen. So begünstigt z.B. die in WO 03/037489 A1 offenbarte Randabsaugung das Wachstum von Filterkuchen am Rand des Filterelements und damit verbunden den verfrühten Abfall der Filterleistung.

Es ist Aufgabe der vorliegenden Erfindung, eine Filtrationsvorrichtung zu schaffen, die konstruktiv einfach und kostengünstig herstellbar ist, geringen Strömungswiderstand und geringe Verstopfungsneigung aufweist und im laufenden Betrieb leicht zu reinigen und reparieren ist.

Diese Aufgabe wird durch die Filtrationsvorrichtung nach Anspruch 1 gelöst, die erfindungsgemäß dadurch gekennzeichnet ist, dass in jedem Filterelement ein ein- oder mehrschichtiges Drainageelement zwischen zwei äußeren Membranen eingeschlossen und beidseitig mit den Membranen flächig haftend verbunden ist und dass das Filterelement mit einer oder mehreren, von gleichgroßen Flächenbereichen des Filterelements umgebenen Abflussbohrungen versehen ist, wobei jede Abflussbohrung im Mittelpunkt des sie umgebenden Flächenbereiches angeordnet ist.

Die beidseitige flächenhafte Verbindung zwischen dem Drainageelement und den äußeren Membranen verhindert ein Aufblähen der Filterelemente, so dass diese bei der Reinigung mittels Rückspülung nicht beschädigt werden bzw. benachbarte Membranen sich gegenseitig blockieren. Durch die erfindungsgemäße Anordnung der Abflussbohrungen wird der transmembrane Differentialdruck über das Filterelement relativ konstant gehalten und damit verbunden gleichmäßiges Filterkuchen-Wachstum und ökonomische Filternutzung erzielt. Dieser Effekt kann noch unterstützt werden durch ein Drainageelement, dessen Strömungswiderstand mit abnehmendem Abstand von den Abflussbohrungen kleiner wird. Beispielsweise kann der Strömungswiderstand des Drainagelementes über seine Dicke bzw. über die Anzahl der Drainageschichten verringert werden.

Zur Filterung langsam strömender Flüssigkeiten kann die erfindungsgemäße Vorrichtung bevorzugt als selbsttragende Konstruktion ausgestaltet werden. Durch den Verzicht auf Gehäuse, Rahmen oder sonstige zusätzliche Stützelemente werden der Strömungswiderstand und die Flächen bzw. Strukturen minimiert, an denen sich grobe Verunreinigungen der zu filternden Flüssigkeit wie z. B. Haare und Fasern häufig verfangen. Zur Filterung von schnell und turbulent strömenden Flüssigkeiten ist es vorteilhaft, die Filterelemente in einem Rahmen zu befestigten, wobei der Rahmen bevorzugt einen kleinen Strömungswiderstand aufweist.

Die offene Bauweise des erfindungsgemäßen Filtersystems begünstigt zudem die mechanische Reinigung der Membranoberflächen, da sie es gestattet, Reinigungsgeräte oder einen Wasserstrahl im wesentlichen von allen Seiten in den Spalt zwischen benachbarten Filterelementen einzubringen. Als Reinigungsgeräte kommen z. B. Rund- oder Flachbürsten in Frage, deren Abmessung in einer Dimension kleiner/gleich dem Spalt zwischen benachbarten Filterelementen ist.

In zweckmäßiger Weise ist die Vorrichtung weitgehend modular aus vielen baugleichen Komponenten zusammengesetzt. Die Vorteile eines durchgängigen Modulkonzeptes für Fertigung, Lagerhaltung, Montage und Installation sind hinlänglich bekannt. Zudem können Filterelemente in Form flexibler Membrantaschen relativ kostengünstig in einem quasi-kontinuierlichen Prozess aus Bahnmaterialien hergestellt werden.

Eine vorteilhafte Ausgestaltung der Erfindung besteht darin, dass der Permeatablauf jedes Filtermoduls mittels einer lösbaren Kupplung mit je einer Anschlussleitung des Permeatsammlers verbunden ist, wobei jede Anschlussleitung mit einem Ventil ausgerüstet ist. Wird das Ventil einer Anschlussleitung geschlossen, so kann das zugehörige Filtermodul im laufenden Betrieb entkuppelt und entfernt werden, ohne dass ungefilterte Flüssigkeit in den Permeatsammler gelangt. Somit ist es möglich, ein defektes Filtermodul im laufenden Betrieb zwecks Austausch oder Reparatur zu entfernen und durch ein voll funktionierendes Filtermodul zu ersetzen.

Die Membranen der erfindungsgemäßen Filtervorrichtung bestehen bevorzugt aus Polyethersulfon, Polysulfon, Polyacrylnitril, Polyvinylidenfluorid, Polyamid, Polyetherimid, Celluloseacetat, Regeneratcellulose, Polyolefinen, Fluorpolymeren und können beispielsweise hergestellt werden, indem man Vliese oder Gewebe mit Polymerlösung beschichtet und die Poren in einem nachfolgenden Phaseninversionsschritt erzeugt oder indem Polymerfolien in geeigneter Weise verstreckt werden, so dass die gewünschten Poren entstehen. Viele dieser Membranen sind kommerziell erhältlich z. B. unter der Bezeichnung NADIR^{®} Membranen (NADIR Filtration GmbH, Wiesbaden) oder Celgard^{®} Flat Sheet Membranes (Celgard Inc., Charlotte, NC, USA).

Das Drainageelement besteht zweckmässig aus einem oder mehreren Geweben aus Garnen, Filamenten oder Drähten aus Polymeren oder Metallen, einem oder mehreren Vliesen aus Polymeren, oder aus einer Kombination dieser Gewebe und Vliese.

Die Membranen können mit dem Drainageelement vollflächig, punktuell oder linienförmig durch Applikation eines Reaktiv- oder Heißklebers verbunden sein. Thermisches Schweißen sowie Ultraschallschweißen sind ebenfalls geeignete Verfahren um einen solchen Verbund herzustellen. An den Rändern des Filterelements ist das Drainageelement mit den Membranen druckdicht versiegelt, um ein Eindringen von ungereinigtem Medium zu verhindern.

Die Erfindung wird im folgenden unter Bezugnahme auf die schematischen Zeichnungen anhand von Ausführungsbeispielen im einzelnen beschrieben. Es zeigen:
- Figur 1: im Schnitt eine Vorrichtung mit vier Filtermodulen, von den en jedes aus voneinander beabstandeten Filterelementen besteht, sowie einen Permeatsammler;
- Figur 2: im Schnitt ein Filtermodul mit Filterelementen, Verbindungselementen und Permeatablauf;
- Figur 3: eine vergrößerte Teilansicht der Figur 2;
- Figur 4a: eine perspektivische Ansicht eines Filtermoduls aus Filterelementen, die mittels Schlaufen an einem Rahmen befestigt sind, und Teilstücken des Permeatablaufs;
- Figur 4b: die Ansicht der Figur 4a, wobei die Filterelemente mittels Bohrungen an einem Rahmen befestigt sind;
- Figur 5: eine Draufsicht eines Filterelements mit sechs Abflussbohrungen und Randbereich;
- Figur 6a: eine perspektivische Teilansicht eines Filterelementes mit Abfluss- bohrung, zwei äußeren Membranen und einer Drainageschicht;
- Figur 6b: die Ansicht der Figur 6a mit einem Stützelement;
- Figur 7: eine perspektivische Ansicht eines Verbindungselementes;
- Figur 8a: im Schnitt eine Teilansicht eines Filtermoduls aus Filterelementen mit äußeren Membranen, Drainageelementen, Stützelementen, Dichtungs- mitteln und Verbindungselementen;
- Figur 8b: die Ansicht der Figur 8a mit zusätzlichem Montagemittel und
- Figur 9: ein Verbindungselement mit Distanzstücken.

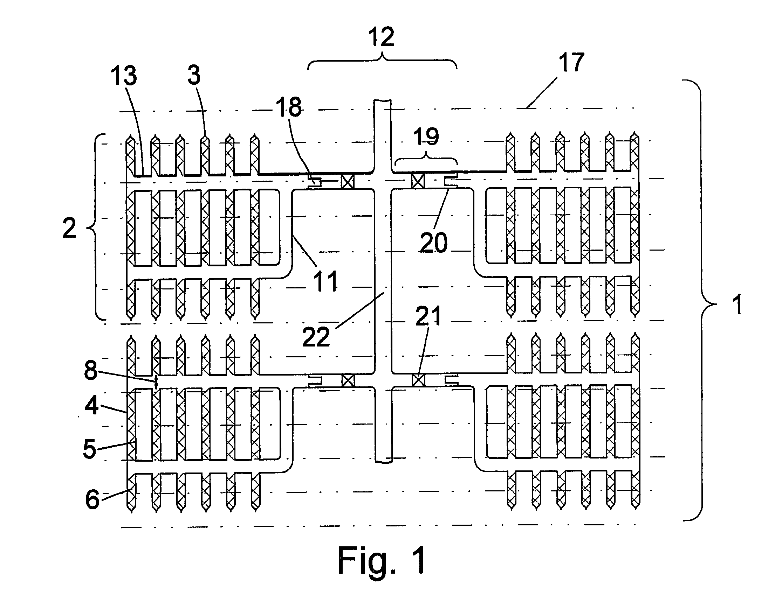

Wie aus Figur 1 zu ersehen ist besteht die Vorrichtung 1 aus einer Anzahl von Filtermodulen 2 mit Filterelementen 3, die als flache Membrantaschen ausgebildet und von einer zu filternden Flüssigkeit 17 umgeben oder umströmt sind. Die Filterelemente 3 sind parallel und voneinander beabstandet angeordnet und über Verbindungselemente 13 druckdicht miteinander verbunden, wobei die Verbindungselemente 13 an Abflussbohrungen 8 in den Filterelementen 3 angeschlossen sind. Ein Permeatablauf 11 je Filtermodul 2 ist mittels einer Kupplung 18 mit einem Permeatsammler 12 verbunden. Der Permeatsammler 12 umfasst eine Hauptleitung 22, von der Anschlussleitungen 19 abzweigen. Die Anschlussleitung 19 ist mit einer Kupptungsaufnahme 20 und einem Ventil 21 ausgerüstet. Im eingekuppelten Zustand bilden die Kupplung 18 und die Kupplungsaufnahme 20 eine druckdichte Verbindung zwischen dem Permatablauf 11 und dem Permeatsammler 12.

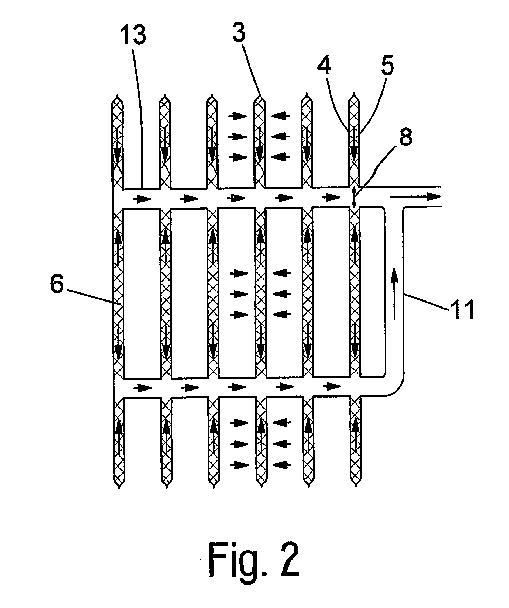

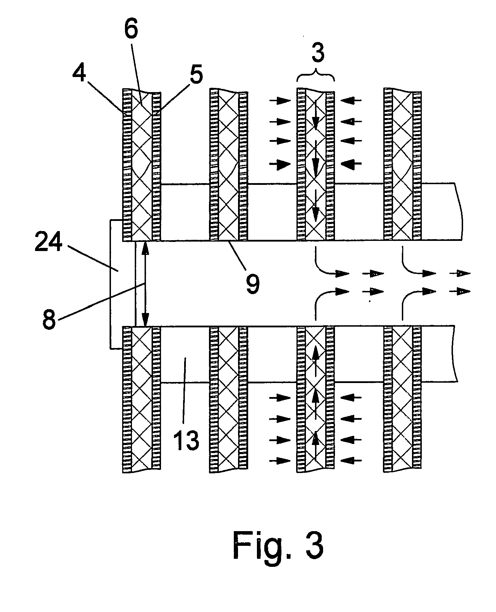

In den Figuren 2 und 3 ist der Permeatfluss durch die Membranen 4 und 5 und das Drainageelement 6 in die Verbindungselemente 13 und den Permeatablauf 11 durch Pfeile angedeutet. Im weiteren zeigt Figur 3 einen Abflussspalt 9 sowie einen Deckel 24, mit dem jede Abflussbohrung 8 an der Außenseite des ersten Filterelementes 3 des Filtermoduls 2 druckdicht verschlossen wird. In einer einfachen Ausführungsform der Erfindung werden die Verbindungselemente 13 und die Deckel 24 direkt mit den Filterelementen 3 verklebt.

In einer bevorzugten Weiterbildung der Erfindung weist das Drainageelement 6 einen über die Fläche des Filterelements 3 variierenden Strömungswiderstand auf, wobei der Strömungswiderstand mit wachsendem Abstand von den Abflußbohrungen 8 stetig oder in Stufen abnimmt, insbesondere dadurch, dass die Dicke des Drainageelements 6 mit wachsendem Abstand von den Abflußbohrungen 8 stetig oder in Stufen zunimmt.

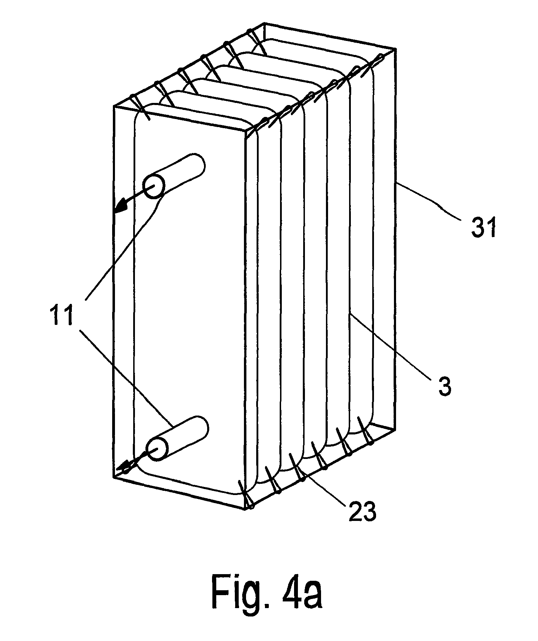

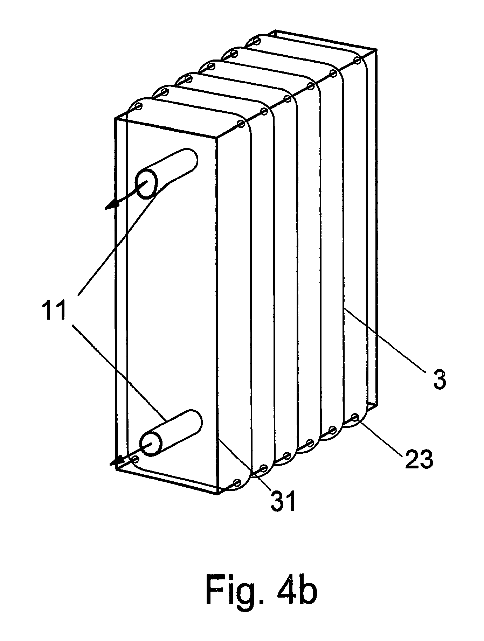

Bei dem in Figur 4a gezeigten Beispiel sind die Filterelemente 3 mit als Schlaufen ausgestalteten Befestigungsmitteln 23 in einem Rahmen 31 aufgehängt. Die Aufhängung gewährleistet, dass die flexiblen Filterelemente 3 auch in stark turbulent strömenden Flüssigkeiten parallel und beabstandet zueinander angeordnet bleiben. Figur 4b zeigt eine alternative Aufhängung mittels Bohrungen. Um den Strömungswiderstand des Rahmens 31 gering zu halten, ist es vorteilhaft, diesen aus Metallprofilen mit kleinem Profilquerschnitt aufzubauen. In einer bevorzugten Ausführungsform ist der Rahmen 31 räumlich fest montiert, z. B. an der Wand eines Klärbeckens, und dient sowohl zur Aufhängung der Filterelemente 3 wie auch zur Befestigung des Permeatsammlers 12 und der Permeatabläufe 11. In dieser bevorzugten Ausführungsform sind der Permeatsammler 12 und die Permeatabläufe 11 mittels Streben (in den Figuren nicht gezeigt) mit dem Rahmen 31 verbunden.

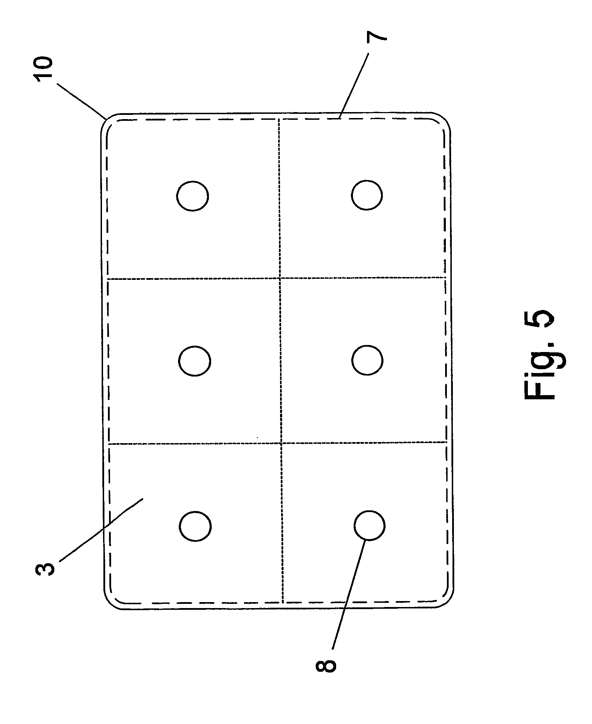

Figur 5 zeigt eine Draufsicht auf ein Filterelement 3 mit abgerundeten Ecken 10. Beispielhaft sind sechs kreisrunde Abflussbohrungen 8 dargestellt, wobei sich jede Abflussbohrung 8 im Mittelpunkt eines gleichgroßen Flächenbereiches des Filterelementes 3 befindet. In der Darstellung der Figur 5 sind die Flächenbereiche durch punktierte Linien angedeutet, wobei jeder Flächenbereich einem 1/6 der Fläche des Filterelements 3 entspricht. Die Abmessungen des Filterelementes 3 sowie Anzahl und Position der Abflussbohrungen 8 werden so gewählt, dass die die Abflussbohrungen 8 umgebenden Flächenbereiche einem ganzzahligen Teil der Fläche des Filterelementes 3 entsprechen. Zur gleichmäßigen Verteilung des transmembranen Differentialdruckes über die Membranfläche erweisen sich quadratische Flächenbereiche als besonders günstig. In einer bevorzugten Ausführungsform der Erfindung ist das Verhältnis zwischen Länge L und Breite B des Filterelementes 3 so bemessen, dass ein gemeinsamer Teiler T existiert, d. h. L/m = B/n = T mit m, n ganzzahlig. Dementsprechend umfasst die Fläche des Filterelementes m x n quadratische Flächenbereiche der Größe T², wobei jeder Flächenbereich mit einer zentrisch gelagerten Abflussbohrung 8 versehen ist.

In dem in Figur 5 durch eine gestrichelte Linie und den Umriss begrenzten Randbereich 7, ist das Filterelement 3 druckdicht versiegelt. Die druckdichte Versiegelung ist in Form einer thermisch oder mit Ultraschall erzeugten Schweißung oder einer Klebe-, Faden- oder Fügenaht ausgeführt, wobei entweder die äußeren Membranen 4 und 5 mit dem Drainageelement 6 oder die äußeren Membranen 4 und 5 direkt miteinander verbunden sind. Für die direkte Versiegelung der Membranen 4 und 5 miteinander ist es zweckmäßig, das Drainageelement 6 geringfügig kleiner zu gestalten als die Membranen 4 und 5.

In einer bevorzugten Ausgestaltung der Klebenaht werden die äußeren Membranen 4 und 5 mit dem Drainageelement 6 versiegelt, indem die Ränder bzw. Kanten des Filterelements in eine Schmelze oder Lösung getaucht werden, wobei die Schmelze oder Lösung im wesentlichen aus dem Polymer-Ausgangsmaterial der Filtermembran besteht.

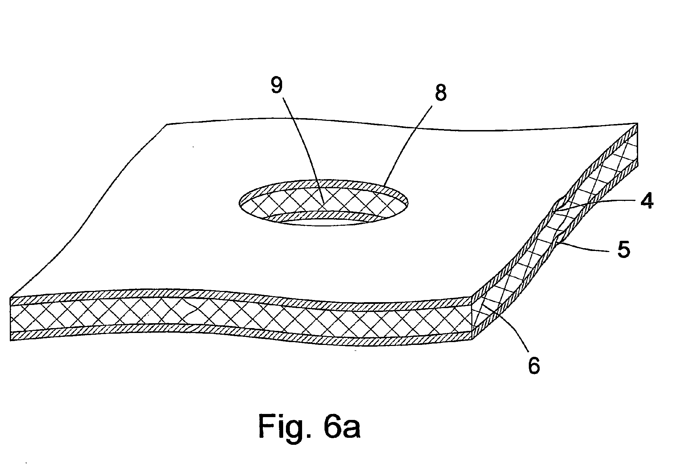

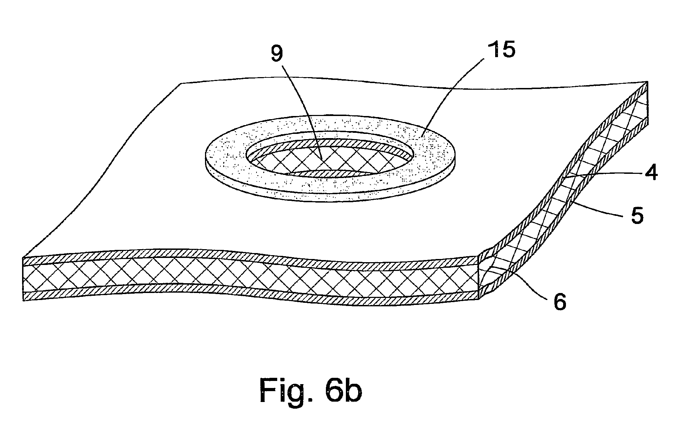

Die Figuren 6a und 6b zeigen perspektivisch eine Abflussbohrung 8 ohne und mit dem Stützelement 15, das hier als Ringscheibe ausgestaltet ist. Ein Abflussspalt 9, durch den das Permeat vom Filterelement-Innenraum in das Verbindungselement 13 und den Permeatablauf 11 gelangt, wird gebildet aus der Schnittfläche der Abflussbohrung 8 mit dem Drainageelement 6. Bei dem erfindungsgemäßen Drainageelement 6, insbesondere wenn es als polymeres Gewebe oder Vlies ausgestaltet ist, kann der Abflussspalt 9 schon durch eine kleine, lokal einwirkende Kraft senkrecht zur Oberfläche der Membran 4 verengt oder gänzlich verschlossen werden. Ein derartiger nachteiliger Effekt wird erfindungsgemäß durch das Stützelement 15 vermieden, das lokal auf den Abflussspalt und senkrecht zur Membran 4 einwirkende Kräfte auf eine größere Fläche verteilt.

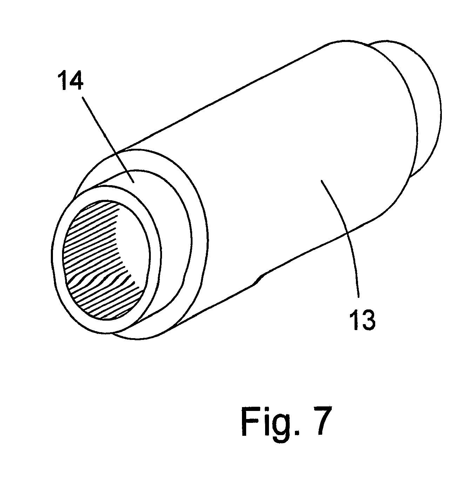

Figur 7 zeigt eine perspektivische Ansicht einer bevorzugten Ausführungsform des Verbindungselementes 13, wobei das Verbindungselement 13 als Rohr ausgestaltet und mit einem zylindrischen Fortsatz 14 versehen ist.

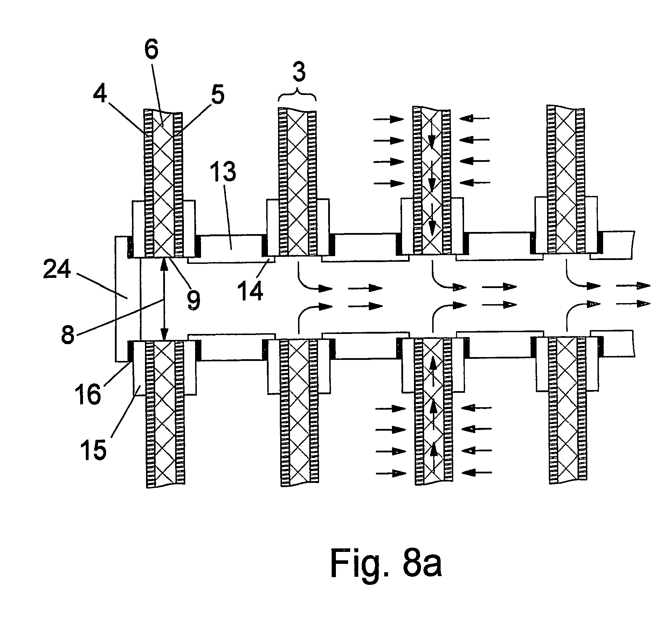

Die in Figur 8a im Schnitt dargestellte Teilansicht eines Filtermoduls 2 verdeutlicht die Funktion des Fortsatzes 14 als Mittel zur räumlichen Ausrichtung und Fixierung der Verbindungselemente 13 zwischen zwei sich gegenüberliegenden Abflussbohrungen 8 in benachbarten Filterelementen 3. Der Außendurchmesser des zylindrischen Fortsatzes 14 ist so bemessen, dass er formschlüssig mit dem Stützelement 15 zusammenfügbar ist. In einer bevorzugten Ausführungsform der Erfindung wird zwischen Stützelement 15 und Verbindungselement 13 ein Dichtungsmittel 16 eingefügt, das als Ringscheibe aus Gummi ausgestaltet ist. Der Fortsatz 14 ist so bemessen, dass seine Länge größer als die Dicke des Dichtungsmittels 16 und kleiner/gleich der Gesamtdicke von Dichtungsmittel 16 und Stützelement 15 ist. Hierdurch wird eine mechanisch stabile und druckdichte Halterung des Verbindungselements 13 erzielt. Die Abflussbohrung 8 des ersten Filterelements 3 im Filtermodul 2 ist an ihrer außenliegenden Seite mit einem Deckel 24 druckdicht verschlossen. Im weiteren ist in Figur 7 die Strömung der zu filternden Flüssigkeit bzw. des Permeats vom Vorlauf durch die Membranen 4 und 5, das Drainageelement 6 und das Verbindungselement 13 in den Permeatablauf 11 angezeigt.

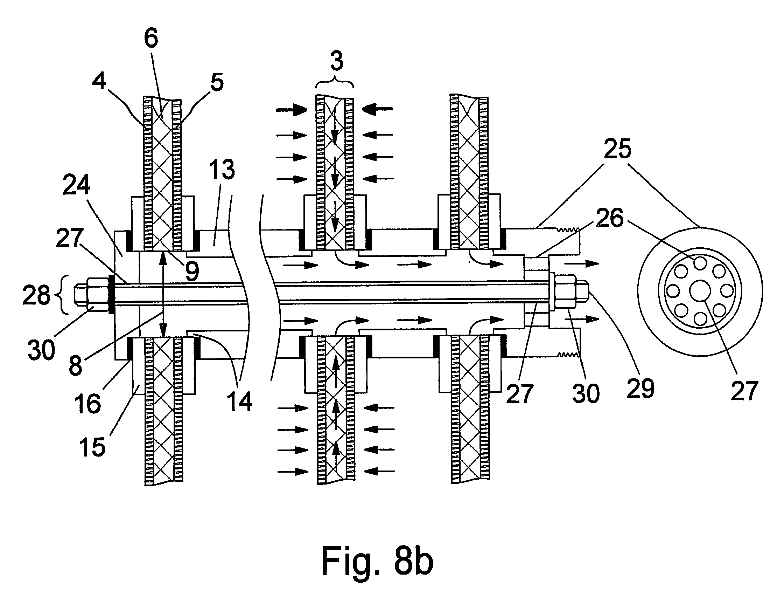

Ein zusätzliches Montagemittel 28 des in Figur 8b gezeigten Ausführungsbeispiels umfasst einen Stab 29 und zwei Muttern 30, wobei der Stab 29 an beiden Enden mit einem Gewinde versehen ist. Der Stab 29 ist durch zentrische Bohrungen 27 eines Deckels 24 und eines Anschlusselementes 25 geführt und mittels der Muttern 30 fixiert. Das Anschlusselement 25 weist mehrere Durchführungen 26 auf, durch die das Permeat in den Permeatablauf 11 strömt.

Vorzugsweise sind der Deckel 24 und das Anschlußelement 25 über das Montagemittel 28 derart mechanisch miteinander gekoppelt, dass das Montagemittel 28 zwischen dem Deckel 24 und dem Anschlußelement 25 eine Zugspannung senkrecht zur Oberfläche der Filterelemente 3 ausübt.

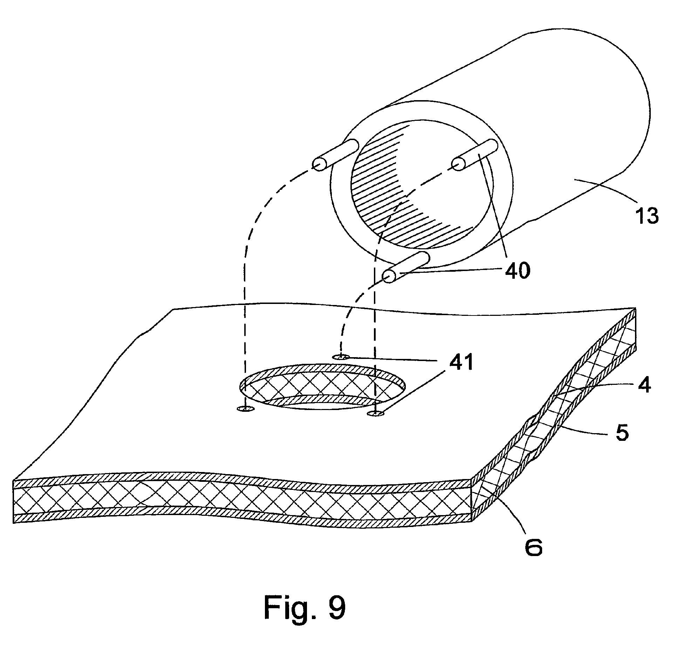

Eine bevorzugte Ausführung des Verbindungselementes 13 ist in Figur 9 dargestellt. Hierbei ist das Verbindungselement 13 ein Rohr, das auf einer Stirnfläche mit mindestens 3 Distanzstücken 40 ausgestattet ist. Die Länge der Distanzstücke 40 beträgt zwischen 90 und 100 % der Dicke des Filterelements 3. Zur passgenauen Aufnahme der Distanzstücke 40 ist das Filterelement 3 mit Distanzbohrungen 41 ausgestattet, wobei die Distanzbohrungen 41 zentrisch um die Abflussbohrungen 8 angeordnet sind. Zweckmäßigerweise wird der Deckel 24 ebenfalls mit Distanzstücken 40 ausgerüstet. Sowohl bei der Montage der Filtermodule 2 wie auch im späteren Betrieb begrenzen die Distanzstücke 40 die Kompression der elastischen Filterelemente 3, wodurch mechanische Beschädigungen und die partielle oder vollständige Blockierung des Permeatflusses vermieden werden. Insbesondere eignen sich die Distanzstücke 40 für eine einfache Ausführungsform der Erfindung, bei der die Verbindungselemente 13, der Deckel 24 und das Anschlusselement 25 direkt mit den Filterelementen 3 verklebt werden.

Eine weitere, zeichnerisch nicht dargestellte Ausführungsform der Erfindung betrifft das Montagemittel 28, das zur Begrenzung der Kompression der Filterelemente 3 mit einem Distanzhalter ausgestattet ist. Insbesondere ist der Distanzhalter ein Hüllrohr zur Durchführung des Stabes 29, wobei die Länge des Hüllrohres so bemessen ist, dass die Kompression der Filterelemente 3 kleiner 10 % ist, wenn das Hüllrohr kraftschlüssig zwischen dem Deckel 24 und dem Anschlusselement 25 eingespannt ist. In einer alternativen ebenfalls erfindungsgemäßen Ausgestaltung besteht der Distanzhalter aus dem Stab 29 und einer ersten und zweiten Kontermutter. Die erste und zweite Kontermutter sind auf den Gewinden des Stabes 29 so positioniert, daß sie einen Anschlag für den Deckel 24 und für das Anschlusselement 25 bilden, wobei der Abstand zwischen der ersten und zweiten Kontermutter so bemessen ist, daß die Kompression der Filterelemente 3 kleiner 10 % ist.

## Patentansprüche

1. Vorrichtung (1) zum Filtern von Stoffen aus Flüssigkeiten durch Mikro-, Ultra- und Nanofiltration mit einer Anzahl von Filtermodulen (2) aus Filterelementen (3), die als flache Membrankissen ausgebildet und von einer zu filternden Flüssigkeit (17) umgeben sind, wobei die Filterelemente (3) parallel und voneinander beabstandet angeordnet und durch Abflussbohrungen (8) und Verbindungselemente (13) miteinander verbunden sind, einem Permeatablauf (11) je Filtermodul (2) und einem Permeatsammler (12), an den die Permeatabläufe (11) der Filtermodule (2) angeschlossen sind, **dadurch gekennzeichnet, dass** in jedem Filterelement (3) ein ein- oder mehrschichtiges Drainageelement (6) zwischen zwei äußeren Membranen (4, 5) eingeschlossen und beidseitig mit den Membranen (4, 5) flächig haftend verbunden ist und dass das Filterelement (3) mit einer oder mehreren, von gleichgroßen Flächenbereichen des Filterelements (3) umgebenen Abflussbohrungen (8) versehen ist, wobei jede Abflussbohrung (8) im Mittelpunkt des sie umgebenden Flächenbereiches angeordnet ist.

2. Vorrichtung nach Anspruch 1, **dadurch gekennzeichnet, dass** Länge und Breite des Filterelements (3) in einem ganzzahligen Verhältnis stehen und dass jede Abflussbohrung (8) im Mittelpunkt eines gleichgroßen quadratischen Flächenbereiches der Fläche des Filterelements (3) angeordnet ist.

3. Vorrichtung nach Anspruch 1, **dadurch gekennzeichnet, dass** die Filterelemente (3) flexibel sind.

4. Vorrichtung nach Anspruch 1, **dadurch gekennzeichnet, dass** das Drainageelement (6) aus einem oder mehreren Geweben aus Garnen, Filamenten oder Drähten aus Polymeren oder Metall, einem oder mehreren Vliesen aus Polymeren, oder aus einer Kombination dieser Gewebe und Vliese besteht

5. Vorrichtung nach Anspruch 1, **dadurch gekennzeichnet, dass** das Drainageelement (6) einen über die Fläche des Filterelements (3) variierenden Strömungswiderstand aufweist, wobei der Strömungswiderstand mit abnehmendem Abstand von den Abflussbohrungen (8) stetig oder in Stufen abnimmt.

6. Vorrichtung nach Anspruch 5, **dadurch gekennzeichnet, dass** die Dicke des Drainageelements (6) mit abnehmendem Abstand von den Abflussbohrungen (8) stetig oder in Stufen zunimmt.

7. Vorrichtung nach Anspruch 1, **dadurch gekennzeichnet, dass** die Filterelemente (3) einen Randbereich (7) aufweisen, in dem die äußeren Membranen (4, 5) und das Drainageelement (6) einen druckdichten Verbund bilden.

8. Vorrichtung nach Anspruch 1, **dadurch gekennzeichnet, dass** die Filterelemente (3) einen Randbereich (7) aufweisen, in dem die äußeren Membranen (4, 5) druckdicht miteinander verbunden sind.

9. Vorrichtung nach Anspruch 1, **dadurch gekennzeichnet, dass** die Filterelemente (3) abgerundete Ecken (10) aufweisen.

10. Vorrichtung nach Anspruch 1, **dadurch gekennzeichnet, dass** die Filterelemente (3) mit Befestigungsmitteln (23) ausgerüstet sind.

11. Vorrichtung nach Anspruch 10, **dadurch gekennzeichnet, dass** die Befestigungsmittel (23) als Schlaufen ausgestaltet sind.

12. Vorrichtung nach Anspruch 10, **dadurch gekennzeichnet, dass** die Befestigungsmittel (23) als druckdichte Bohrungen ausgestaltet sind.

13. Vorrichtung nach Anspruch 1, **dadurch gekennzeichnet, dass** das Filtermodul (2) mit einem Rahmen (31) ausgerüstet ist und dass die Befestigungsmittel (23) an dem Rahmen (31) angebracht sind.

14. Vorrichtung nach Anspruch 13, **dadurch gekennzeichnet, dass** der Rahmen (31) räumlich fixiert ist und dass der Permeatsammler (12) und der Permeatablauf (11) an dem Rahmen (31) montiert sind.

15. Vorrichtung nach Anspruch 1, **dadurch gekennzeichnet, dass** jede Abflussbohrung (8) auf den beiden Außenseiten des Filterelements (3) mit je einem Stützelement (15) aus einem Polymer oder einem Metall ausgerüstet ist.

16. Vorrichtung nach Anspruch 1 oder 15, **dadurch gekennzeichnet, dass** benachbarte Filterelemente (3) mittels Verbindungselementen (13) druckdicht miteinander verbunden sind, wobei jedes Verbindungselement (13) an zwei gegenüberliegende Abflussbohrungen (8) in den benachbarten Filterelementen (3) angeschlossen ist.

17. Vorrichtung nach Anspruch 16, **dadurch gekennzeichnet, dass** das Verbindungselement (13) aus einem Polymer oder Metall besteht.

18. Vorrichtung nach Anspruch 1 oder 15, **dadurch gekennzeichnet, dass** die Abflussbohrung (8) an der Außenseite des ersten Filterelementes (3) des Filtermoduls (2) mittels eines Deckels (24) druckdicht verschlossen ist.

19. Vorrichtung nach Anspruch 1 oder 15, **dadurch gekennzeichnet, dass** die Abflussbohrung (8) an der Außenseite des letzten Filterelementes (3) des Filtermoduls (2) druckdicht an den Permeatablauf (11) angeschlossen ist.

20. Vorrichtung nach Anspruch 1 oder 15, **dadurch gekennzeichnet, dass** die Abflussbohrung (8) an der Außenseite des letzten Filterelementes (3) des Filtermoduls (2) mittels eines Anschlusselementes (25) druckdicht an den Permeatablauf (11) angeschlossen ist.

21. Vorrichtung nach den Ansprüchen 18 und 20, **dadurch gekennzeichnet, dass** der Deckel (24) und das Anschlusselement (25) über ein Montagemittel (28) mechanisch miteinander gekoppelt sind, wobei das Montagemittel (28) zwischen dem Deckel (24) und dem Anschlusselement (25) eine Zugspannung senkrecht zur Oberfläche der Filterelemente (3) ausübt.

22. Vorrichtung nach Anspruch 21, **dadurch gekennzeichnet, dass** das Montagemittel (28) aus einem Stab (29) und zwei Muttern (30) aus Metall oder Kunststoff besteht, dass der Stab (29) an beiden Enden Gewinde für die Muttern (30) aufweist, dass der Deckel (24) und das Anschlusselement (25) jeweils mit einer zentrischen Bohrung zur formschlüssigen Durchführung des Stabes (29) versehen sind und dass das Anschlusselement (25) mehrere Durchführungen (26) zur Überleitung des Permeats in den Permeatablauf (11) aufweist.

23. Vorrichtung nach den Ansprüchen 16 bis 22, **dadurch gekennzeichnet, dass** zwischen den Filterelementen (3) und den Verbindungselementen (13), zwischen dem ersten Filterelement (3) und den Deckeln (24) und zwischen dem letzten Filterelement (3) und dem Permeatablauf (11) oder den Anschlusselementen (25) jeweils ein Dichtungsmittel (16) aus einem elastomeren Material angeordnet ist.

24. Vorrichtung nach Anspruch 1, **dadurch gekennzeichnet, dass** die Abflussbohrung (8) kreisrund ist.

25. Vorrichtung nach Anspruch 15, **dadurch gekennzeichnet, dass** das Stützelement (15) eine Ringscheibe ist.

26. Vorrichtung nach Anspruch 16, **dadurch gekennzeichnet, dass** das Verbindungselement (13) ein Rohr ist.

27. Vorrichtung nach Anspruch 23, **dadurch gekennzeichnet, dass** das Dichtungsmittel (16) eine Ringscheibe ist.

28. Vorrichtung nach Anspruch 26, **dadurch gekennzeichnet, dass** das rohrförmige Verbindungselement (13) an beiden Stirnseiten einen zylindrischen Fortsatz (14) aufweist, wobei der Außendurchmesser des Fortsatzes (14) so bemessen ist, dass sich der Fortsatz (14) formschlüssig in das ringförmige Stützelement (15) einfügt, dass der Innendurchmesser des Fortsatzes (14) gleich dem Innendurchmesser des Verbindungselementes (13) ist und dass die Länge des Fortsatzes (14) größer als die Dicke des Dichtungsmittels (16) und kleiner/gleich der Gesamtdicke von Stützelement (15) und Dichtungsmittel (16) ist.

29. Vorrichtung nach Anspruch 1, **dadurch gekennzeichnet, dass** der Permeatablauf (11) mit einer Kupplung (18) ausgerüstet ist.

30. Vorrichtung nach Anspruch 1, **dadurch gekennzeichnet, dass** der Permeatsammler (12) aus einer Hauptleitung (22) und Anschlussleitungen (19) für die Filtermodule (2) aufgebaut ist.

31. Vorrichtung nach Anspruch 30, **dadurch gekennzeichnet, dass** jede Anschlussleitung (19) mit einem Ventil (21) und einer Kupplungsaufnahme (20) für die Kupplung (18) ausgerüstet ist.

32. Vorrichtung nach Anspruch 1, **dadurch gekennzeichnet, dass** das Verbindungselement (13) ein Rohr ist, das auf einer Stirnfläche drei oder mehr in gleichem Abstand zueinander angeordnete Distanzstücke (40) aufweist, dass die Länge der Distanzstücke (40) zwischen 90 und 100 % der Dicke der Filterelemente (3) beträgt und dass um alle Abflussbohrungen (8) eines jeden Filterelements (3) drei oder mehr Distanzbohrungen (41) zur passgenauen Aufnahme der Distanzstücke (40) angeordnet sind.

33. Vorrichtung nach Anspruch 32, **dadurch gekennzeichnet, dass** der Deckel (24) mit drei oder mehr Distanzstücken (40) ausgerüstet ist.

34. Vorrichtung nach Anspruch 22, **dadurch gekennzeichnet, dass** das Montagemittel (28) mit einem Distanzhalter zur Begrenzung der Kompression der Filterelemente (3) ausgestattet ist.

35. Vorrichtung nach Anspruch 34, **dadurch gekennzeichnet, dass** der Distanzhalter ein Hüllrohr zur Durchführung des Stabes (29) ist, wobei die Länge des Hüllrohres so bemessen ist, daß die Kompression der Filterelemente (3) kleiner 10 % ist, wenn das Hüllrohr kraftschlüssig zwischen dem Deckel (24) und dem Anschlusselement (25) eingespannt ist.

36. Vorrichtung nach Anspruch 34, **dadurch gekennzeichnet, dass** der Distanzhalter den Stab (29) und eine erste und zweite Kontermutter beinhaltet, daß die erste und zweite Kontermutter auf den Gewinden des Stabes (29) positioniert sind, daß die erste Kontermutter einen Anschlag für den Deckel (24) und die zweite Kontermutter einen Anschlag für das Anschlusselement (25) bildet, wobei der Abstand zwischen der ersten und zweiten Kontermutter so bemessen ist, daß die Kompression der Filterelemente (3) kleiner 10 % ist.

## Claims

1. An apparatus (1) for filtering substances out of liquids by micro-, ultra- and nanofiltration, having a number of filter modules (2) comprising filter elements (3), which are formed as flat membrane cushions and are surrounded by a liquid (17) that is to be filtered, the filter elements (3) being arranged parallel to and at a distance from one another and being connected to one another by outflow bores (8) and connecting elements (13), and having one permeate outlet (11) per filter module (2) and a permeate collection manifold (12), to which the permeate outlets (11) of the filter modules (2) are connected, wherein in each filter element (3) a single-layer or multilayer drainage element (6) is enclosed between two outer membranes (4, 5) and is joined to the membranes (4, 5) on both sides by surface-to-surface adhesion, and wherein the filter element (3) is provided with one or more outflow bores (8) surrounded by equally sized surface regions of the filter element (3), each outflow bore (8) being arranged in the center of the surface region surrounding it.

2. The apparatus as claimed in claim 1, wherein the length and width of the filter element (3) are in an integer-number ratio, and wherein each outflow bore (8) is arranged in the center of an equally sized square region of the surface of the filter element (3).

3. The apparatus as claimed in claim 1, wherein the filter elements (3) are flexible.

4. The apparatus as claimed in claim 1, wherein the drainage element (6) comprises one or more woven fabrics made up of yarns, filaments, threads or wires of polymers or metals, one or more nonwoven fabrics of polymers, or a combination of these woven and nonwoven fabrics.

5. The apparatus as claimed in claim 1, wherein the drainage element (6) has a flow resistance which varies over the surface of the filter element (3), the flow resistance decreasing continuously or in steps at decreasing distance from the outflow bores (8).

6. The apparatus as claimed in claim 5, wherein the thickness of the drainage element (6) increases continuously or in steps at decreasing distance from the outflow bores (8).

7. The apparatus as claimed in claim 1, wherein the filter elements (3) have an edge region (7), in which the outer membranes (4, 5) and the drainage element (6) form a pressure-tight assembly.

8. The apparatus as claimed in claim 1, wherein the filter elements (3) have an edge region (7) in which the outer membranes (4, 5) are joined to one another in a pressure-tight manner.

9. The apparatus as claimed in claim 1, wherein the filter elements (3) have rounded corners (10).

10. The apparatus as claimed in claim 1, wherein the filter elements (3) are equipped with securing means (23).

11. The apparatus as claimed in claim 10, wherein the securing means (23) are configured as loops.

12. The apparatus as claimed in claim 10, wherein the securing means (23) are configured as pressure-tight bores.

13. The apparatus as claimed in claim 1, wherein the filter module (2) is equipped with a frame (31), and wherein the securing means (23) are arranged on the frame (31).

14. The apparatus as claimed in claim 13, wherein the frame (31) is spatially fixed, and wherein the permeate collection manifold (12) and the permeate outlet (11) are mounted on the frame (31).

15. The apparatus as claimed in claim 1, wherein each outflow bore (8) on the two outer sides of the filter element (3) is equipped with in each case one supporting element (15) made from a polymer or a metal.

16. The apparatus as claimed in claim 1 or 15, wherein adjacent filter elements (3) are connected to one another in a pressure-tight manner by means of connecting elements (13), each connecting element (13) being connected to two outflow bores (8) located opposite one another in the adjacent filter elements (3).

17. The apparatus as claimed in claim 16, wherein the connecting element (13) consists of a polymer or metal.

18. The apparatus as claimed in claim 1 or 15, wherein the outflow bore (8) is closed off in a pressure-tight manner by means of a cover (24) on the outer side of the first filter element (3) of the filter module (2).

19. The apparatus as claimed in claim 1 or 15, wherein the outflow bore (8) is connected in a pressure-tight manner to the permeate outlet (11) on the outer side of the last filter element (3) of the filter module (2).

20. The apparatus as claimed in claim 1 or 15, wherein the outflow bore (8) is connected in a pressure-tight manner to the permeate outlet (11) by means of a fitting element (25) on the outer side of the last filter element (3) of the filter module (2).

21. The apparatus as claimed in claims 18 and 20, wherein the cover (24) and the fitting element (25) are mechanically coupled to one another via a mounting means (28), the mounting means (28) exerting a tensile stress perpendicular to the surface of the filter elements (3) between the cover (24) and the fitting element (25).

22. The apparatus as claimed in claim 21, wherein the mounting means (28) comprises a rod (29) and two nuts (30) made from metal or plastic, wherein the rod (29), at both ends, has screw threads for the nuts (30), wherein the cover (24) and the fitting element (25) are each provided with a central bore for the rod (29) to pass through in a positively locking manner, and wherein the fitting element (25) has a plurality of passages (26) for transferring the permeate into the permeate outlet (11).

23. The apparatus as claimed in claims 16 to 22, wherein a sealing means (16) made from an elastomeric material is in each case arranged between the filter elements (3) and the connecting elements (13), between the first filter element (3) and the covers (24) and between the last filter element (3) and the permeate outlet (11) or the fitting elements (25).

24. The apparatus as claimed in claim 1, wherein the outflow bore (8) is circular.

25. The apparatus as claimed in claim 15, wherein the supporting element (15) is an annular disk.

26. The apparatus as claimed in claim 16, wherein the connecting element (13) is a tube.

27. The apparatus as claimed in claim 23, wherein the sealing means (16) is an annular disk.

28. The apparatus as claimed in claim 26, wherein the tubular connecting element (13) has a cylindrical extension (14) on both end sides, the external diameter of the extension (14) being such that the extension (14) is inserted in a positively locking manner into the annular supporting element (15), wherein the internal diameter of the extension (14) is equal to the internal diameter of the connecting element (13), and wherein the length of the extension (14) is greater than the thickness of the sealing means (16) and less than or equal to the total thickness of supporting element (15) and sealing means (16).

29. The apparatus as claimed in claim 1, wherein the permeate outlet (11) is equipped with a coupling (18).

30. The apparatus as claimed in claim 1, wherein the permeate collection manifold (12) is composed of a main line (22) and connection lines (19) for the filter modules (2).

31. The apparatus as claimed in claim 30, wherein each connection line (19) is equipped with a valve (21) and a coupling-receiving part (20) for receiving the coupling (18).

32. The apparatus as claimed in claim 1, wherein the connecting element (13) is a tube which on an end face has three or more spacer pieces (40) arranged equidistantly with respect to one another, wherein the length of the spacer pieces (40) amounts to between 90 and 100 % of the thickness of the filter elements (3), and wherein three or more spacer bores (41) for receiving the spacer pieces (40) in a tightly fitting manner are arranged around all the outflow bores (8) of each filter element (3).

33. The apparatus as claimed in claim 32, wherein the cover (24) is equipped with three or more spacer pieces (40).

34. The apparatus as claimed in claim 22, wherein the mounting means (28) is equipped with a spacer for limiting the compression of the filter elements (3).

35. The apparatus as claimed in claim 34, wherein the spacer is a cladding tube for the rod (29) to pass through, the length of the cladding tube being such that the compression of the filter elements (3) is less than 10% when the cladding tube is clamped in a nonpositively locking manner between the cover (24) and the fitting element (25).

36. The apparatus as claimed in claim 34, wherein the spacer includes the rod (29) and a first and second locking nut, wherein the first and second locking nuts are positioned on the screw threads of the rod (29), and wherein the first locking nut forms a stop for the cover (24) and the second locking nut forms a stop for the fitting element (25), the distance between the first and second locking nuts being such that the compression of the filter elements (3) is less than 10 %.

## Revendications

1. Dispositif (1) pour éliminer par filtration des substances contenues dans des liquides par micro-, ultra- et nanofiltration avec un certain nombre de modules de filtration (2) constitués d'éléments de filtration (3), qui se présentent sous la forme de coussins à membrane plats et sont entourés d'un liquide (17) à filtrer, dans lequel les éléments de filtration (3) sont aménagés parallèlement et à distance l'un de l'autre et sont raccordés l'un à l'autre par des trous d'écoulement (8) et des éléments de raccordement (13), d'une évacuation de perméat (11) pour chaque module de filtration (2) et d'un collecteur de perméat (12), auquel sont raccordées les évacuations de perméat (11) des modules de filtration (2), **caractérisé en ce que**, dans chaque élément de filtration (3), un élément de drainage (6) à une ou plusieurs couches est inclus entre deux membranes externes (4, 5) et raccordé de part et d'autre par adhérence à plat aux membranes (4, 5) et **en ce que** l'élément de filtration (3) est doté d'un ou de plusieurs trous d'écoulement (8) entourés de zones de surface de même taille de l'élément de filtration (3), chaque trou d'écoulement (8) étant ménagé au centre de la zone de surface entourant celui-ci.

2. Dispositif selon la revendication 1, **caractérisé en ce que** la longueur et la largeur de l'élément de filtration (3) se trouvent dans un rapport en nombre entier et **en ce que** chaque trou d'écoulement (8) est ménagé au centre d'une zone de surface carrée de même taille de la surface de l'élément de filtration (3).

3. Dispositif selon la revendication 1, **caractérisé en ce que** les éléments de filtration (3) sont flexibles.

4. Dispositif selon la revendication 1, **caractérisé en ce que** l'élément de drainage (6) est constitué d'un ou plusieurs tissus formés de fils textiles, de filaments ou de fils métalliques en polymères ou en métal, d'un ou plusieurs non-tissés formés de polymères ou d'une combinaison de ces tissus et de ces non-tissés.

5. Dispositif selon la revendication 1, **caractérisé en ce que** l'élément de drainage (6) présente une résistance à l'écoulement variant sur la surface de l'élément de filtration (3), dans lequel la résistance à l'écoulement diminue constamment ou par paliers à mesure que la distance des trous d'écoulement (8) se réduit.

6. Dispositif selon la revendication 5, **caractérisé en ce que** l'épaisseur de l'élément de drainage (6) augmente constamment ou par paliers à mesure que la distance des trous d'écoulement (8) diminue.

7. Dispositif selon la revendication 1, **caractérisé en ce que** les éléments de filtration (3) présentent une zone de bord (7), dans laquelle les membranes externes (4, 5) et l'élément de drainage (6) forment un assemblage étanche à la pression.

8. Dispositif selon la revendication 1, **caractérisé en ce que** les éléments de filtration (3) présentent une zone de bord (7), dans laquelle les membranes externes (4, 5) sont raccordées l'une à l'autre de manière étanche à la pression.

9. Dispositif selon la revendication 1, **caractérisé en ce que** les éléments de filtration (3) présentent des coins arrondis (10).

10. Dispositif selon la revendication 1, **caractérisé en ce que** les éléments de filtration (3) sont équipés de moyens de fixation (23).

11. Dispositif selon la revendication 10, **caractérisé en ce que** les moyens de fixation (23) sont conformés en boucles.

12. Dispositif selon la revendication 10, **caractérisé en ce que** les moyens de fixation (23) sont conformés en trous étanches à la pression.

13. Dispositif selon la revendication 1, **caractérisé en ce que** le module de filtration (2) est équipé d'un cadre (31) et **en ce que** les moyens de fixation (23) sont montés sur le cadre (31).

14. Dispositif selon la revendication 13, **caractérisé en ce que** le cadre (31) est fixé dans les trois dimensions et **en ce que** le collecteur de perméat (12) et l'évacuation de perméat (11) sont montés sur le cadre (31).

15. Dispositif selon la revendication 1, **caractérisé en ce que** chaque trou d'écoulement (8) est équipé, sur les deux côtés externes de l'élément de filtration (3), d'un élément d'appui respectif (15) constitué d'un polymère ou d'un métal.

16. Dispositif selon la revendication 1 ou 15, **caractérisé en ce que** des éléments de filtration adjacents (3) sont raccordés l'un à l'autre de manière étanche à la pression au moyen d'éléments de raccordement (13), chaque élément de raccordement (13) étant relié à deux trous d'écoulement opposés (8) dans les éléments de filtration adjacents (3).

17. Dispositif selon la revendication 16, **caractérisé en ce que** l'élément de raccordement (13) est constitué d'un polymère ou d'un métal.

18. Dispositif selon la revendication 1 ou 15, **caractérisé en ce que** le trou d'écoulement (8) est fermé de manière étanche à la pression sur le côté externe du premier élément de filtration (3) du module de filtration (2) au moyen d'un couvercle (24).

19. Dispositif selon la revendication 1 ou 15, **caractérisé en ce que** le trou d'écoulement (8) sur le côté externe du dernier élément de filtration (3) du module de filtration (2) est relié de manière étanche à la pression à l'évacuation de perméat (11).

20. Dispositif selon la revendication 1 ou 15, **caractérisé en ce que** le trou d'écoulement (8) sur le côté externe du dernier élément de filtration (3) du module de filtration (2) est relié au moyen d'un élément de liaison (25) de manière étanche à la pression à l'évacuation de perméat (11).

21. Dispositif selon les revendications 18 et 20, **caractérisé en ce que** le couvercle (24) et l'élément de liaison (25) sont couplés l'un à l'autre mécaniquement par un moyen de montage (28), dans lequel le moyen de montage (28) exerce entre le couvercle (24) et l'élément de liaison (25) une contrainte de traction perpendiculairement à la surface des éléments de filtration (3).

22. Dispositif selon la revendication 21, **caractérisé en ce que** le moyen de montage (28) est constitué d'une tige (29) et de deux écrous (30) en métal ou en matériau synthétique, la tige (29) présente aux deux extrémités un filet pour les écrous (30), le couvercle (24) et l'élément de liaison (25) sont équipés respectivement d'un trou central pour le passage mécanique de la tige (29) et l'élément de liaison (25) présente plusieurs passages (26) pour transférer le perméat dans l'évacuation de perméat (11).

23. Dispositif selon les revendications 16 à 22, **caractérisé en ce qu'**entre les éléments de filtration (3) et les éléments de raccordement (13), entre le premier élément de filtration (3) et les couvercles (24) et entre le dernier élément de filtration (3) et l'évacuation de perméat (11) ou les éléments de liaison (25) est respectivement aménagé un moyen d'étanchéité (16) constitué d'un matériau élastomère.

24. Dispositif selon la revendication 1, **caractérisé en ce que** le trou d'écoulement (8) est circulaire.

25. Dispositif selon la revendication 15, **caractérisé en ce que** l'élément d'appui (15) est un disque annulaire.

26. Dispositif selon la revendication 16, **caractérisé en ce que** l'élément de raccordement (13) est un tube.

27. Dispositif selon la revendication 23, **caractérisé en ce que** le moyen d'étanchéité (16) est un disque annulaire.

28. Dispositif selon la revendication 26, **caractérisé en ce que** l'élément de raccordement tubulaire (13) présente un prolongement cylindrique (14) sur les deux côtés frontaux, dans lequel le diamètre externe du prolongement (14) est dimensionné de sorte que le prolongement (14) s'insère par adaptation de forme dans l'élément d'appui annulaire (14), que le diamètre interne du prolongement (14) soit identique au diamètre interne de l'élément de raccordement (13) et que la longueur du prolongement (14) soit supérieure à l'épaisseur du moyen d'étanchéité (16) et inférieure ou égale à l'épaisseur totale de l'élément d'appui (15) et du moyen d'étanchéité (16).

29. Dispositif selon la revendication 1, **caractérisé en ce que** l'évacuation de perméat (11) est équipée d'un couplage (18).

30. Dispositif selon la revendication 1, **caractérisé en ce que** le collecteur de perméat (12) est constitué d'une conduite principale (22) et de conduites de liaison (19) pour les modules de filtration (2).

31. Dispositif selon la revendication 30, **caractérisé en ce que** chaque conduite de liaison (19) est équipée d'une soupape (21) et d'un logement de couplage (20) pour le couplage (18).

32. Dispositif selon la revendication 1, **caractérisé en ce que** l'élément de raccordement (13) est un tube qui présente, sur une surface frontale, trois pièces d'écartement (40) ou plus, agencées à égale distance l'une de l'autre, la longueur des pièces d'écartement (40) est comprise entre 90 et 100 % de l'épaisseur des éléments de filtration (3) et autour de tous les trous d'évacuation (8) de chacun des éléments de filtration (3) sont agencés trois trous d'écartement (41) ou plus pour le logement à ajustement serré des pièces d'écartement (40).

33. Dispositif selon la revendication 32, **caractérisé en ce que** le couvercle (24) est équipé de trois pièces d'écartement (40) ou plus.

34. Dispositif selon la revendication 22, **caractérisé en ce que** le moyen de montage (28) est équipé d'un support d'écartement pour limiter la compression des éléments de filtration (3).

35. Dispositif selon la revendication 34, **caractérisé en ce que** le support d'écartement est un tube enveloppant pour faire passer la tige (29), dans lequel la longueur du tube enveloppant est dimensionnée de sorte que la compression des éléments de filtration (3) soit inférieure à 10 %, si le tube enveloppant est serré par adhérence entre le couvercle (24) et l'élément de liaison (25).

36. Dispositif selon la revendication 34, **caractérisé en ce que** le support d'écartement contient la tige (29) et un premier et un second contre-écrou, les premier et second contre-écrous sont positionnés sur les filets de la tige (29), le premier contre-écrou forme une butée pour le couvercle (24) et le second contre-écrou forme une butée pour l'élément de liaison (25), dans lequel la distance entre les premier et second contre-écrous est dimensionnée de sorte que la compression des éléments de filtration (3) soit inférieure à 10 %.
